# EUROPEAN PATENT SPECIFICATION

(11) **EP 2 949 522 B1**
(45) Date of publication and mention of the grant of the patent: **17.01.2018**
(21) Application number: 14743810.5
(22) Date of filing: 23.01.2014
(51) Int. Cl.: B60S 1/34

(54) **WIPER ARM**
WISCHERARM
BRAS D'ESSUIE-GLACE

(30) Priority: 24.01.2013 JP 2013011525
(43) Date of publication of application: 02.12.2015
(73) Proprietor: Nippon Wiper Blade Co., Ltd., Kazo-shi, Saitama 347-8585 (JP)
(72) Inventor: SHIMIZU Yuta, Kazo-shi Saitama 347-8585 (JP)
(74) Representative: Harris, David James
(86) International application number: PCT/JP2014/051421
(87) International publication number: WO 2014/115820

(56) References cited:
- JP-A- H03 284 447
- JP-U- S 592 658
- JP-U- H0 744 190
- US-A- 2 844 838
- US-A- 4 477 940
- US-A- 5 435 042

## Description

### [Technical Field]

The present invention relates to a wiper arm including biasing means (a tension spring) for generating a force for pressing a wiper blade against a surface to be wiped.

### [Background Art]

A wiper system is generally comprised of a wiper blade wiping a surface such as an automotive windshield, a wiper arm supporting the wiper blade, and driving means (a drive motor) for driving the wiper arm. Such a wiper arm includes an arm head connected to the driving means, an arm body which is rotatably connected to the arm head and supports the wiper blade.

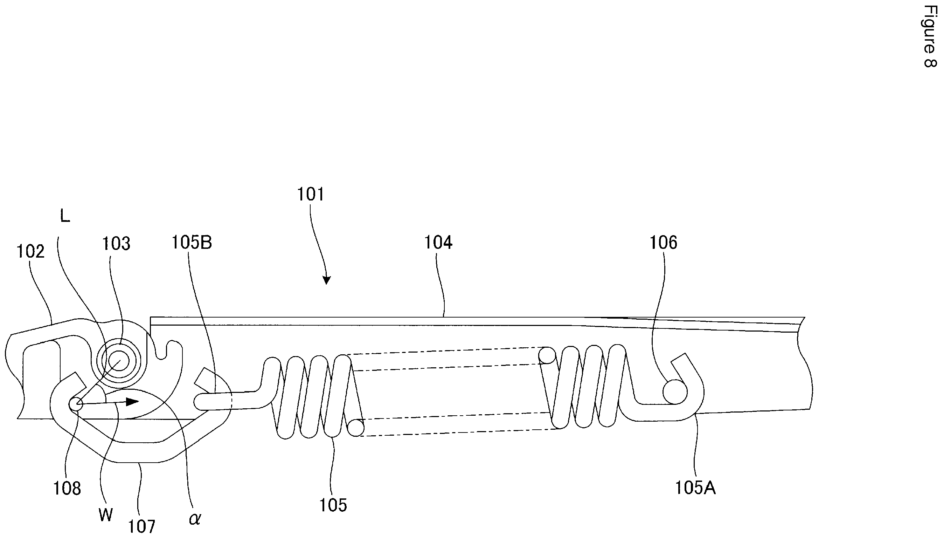

Fig. 8 shows a fragmentary sectional view of such a conventional wiper arm. As shown, a wiper arm 101 includes an arm head 102 and a retainer rotatably connected to the arm head 102 through a pivot shaft 103. The retainer 104 is a member which constitutes a part of an arm main body.

A spring 105 is an extension spring and is provided between the arm head 102 and the retainer 104. The spring 106 includes a distal end hook section 105A of the spring 105 which is attached to the retainer 104 through a fixing rivet 106. The spring 105 also includes a proximal end hook section 105B which is attached to the arm head 102 through a hook member 107 and a fixing pin 108.

With this construction, the spring 105 functions to apply a biasing force to a rotational movement of the retainer 104 with respect to the arm head 102. Specifically, as shown in Figure 8, when the wiper arm 101 is in a normal use state where the retainer 104 is arranged to extend approximately straight from the arm head 102, the spring 105 applies a force so as to cause the retainer 104 to rotate in the clockwise direction in the drawing. A wiper blade (not shown) held by the arm main body is thereby pressed against the surface to be wiped (not shown) with an appropriate pressing force. On the other hand, when the wiper arm 101 is rotated in the clockwise rotation direction in the drawing to a locked-back state where the retainer 104 is upright with respect to the arm head 102, the spring 105 urges the retainer 104 in the counter-clockwise direction in the drawing so that the retainer 104 is held in such an upright state.

We are aware of US Patent No 2 844 838, which discloses a wiper arm in accordance with the pre-characterising portion of claim 1.

### [Citation List]

### [Patent Literature]

[PTL1]
   Japanese Laid-Open Patent Application No. 2009-045971
[PTL2]
   Japanese Laid-Open Patent Application No. 2008-56051

### [Summary of Invention]

### [Technical Problem]

As described above, the wiper arm 101 includes the spring 105 generating a moment for rotating the arm head 102 and the retainer 104 about the pivot shaft 103. To generate a sufficiently large moment between the arm head 2 and the retainer 104, the direction of a force W applied from the spring 105 must be directed at a certain degree α (ideally, 90 degrees) with respect to the direction of a line segment L connecting the rotation center of the arm head 102 (the center of the pivot shaft 103) and the point of application of the force of the spring 105 (the center of the fixing pin 108). Accordingly, the fixing pin 108 must be arranged on the lower side of the pivot shaft 103 (the side to which the arm head 102 is rotated). Thus, the entire of the spring 105 cannot be arranged within the interior space of the
retainer 104. Also, the hook member 107 is arranged to protrude from the lower side of the retainer 104. This prevents the wiper arm 101 from being thinner. In addition, to generate a maximum moment efficiently, the angle α between the line segment L connecting the rotation center of the arm head 2 and the point of application of the force, and the direction of the force W from the spring 105 must be 90 degrees, but such arrangement is difficult.

In view of the foregoing, it is an object of the present invention to provide a wiper arm provided with biasing means for generating a pressing force for pressing a wiper blade against a surface to be wiped, which enables the thickness of the wiper arm to be thinner and generates a sufficient pressing force.

### [Solution to Problem]

The present invention provides a wiper arm in accordance with claim 1. Optional features are recited in the dependent claims.

Said link mechanism includes an arm main body side link member linked with said arm main body through said biasing means and a head side link member linked with said arm head, wherein said arm main body side link member is rotatably attached to said arm main body, and said arm main
body side link member and said head side link member are rotatably connected with each other.

When said arm main body is in an upright state with respect to said arm head, the combination of said arm main body side link member and said head side link member functions as a toggle mechanism to generate a force for holding said arm main body in said upright state.

Said arm main body side link member may include a bent section and a pair of arm sections provided on both sides of said bent section, wherein one of said arm sections is connected with said arm main body through said biasing means, and the other of said arm sections is connected with said arm head.

Said arm main body side link member may be rotatably attached to said arm main body at the bent section.

One of said arm main body side link member and said head side link member may include a fitting recess section having a cut-away shape, and the other of said arm main body side link member and said head side link member may include a fitting axis for fitting in said fitting recess section.

### [Advantageous Effects of Invention]

According to the present invention, the wiper arm (for example, wiper arm 1) includes the link mechanism (for example, link mechanism 10) which is rotatably attached to the arm main body (for example, retainer 4), and the force of the biasing means (for example, spring 7) acts between the arm main body and the arm head (for example, arm head 2) through the link mechanism. Accordingly, the force from the biasing means is appropriately changed in its direction when acting between the arm head and the arm main body. For example, the link mechanism may include a link member (for example, arm main body side link member 11) having a bent section (for example, bent section 11A) and arm sections (for example, distal end arm section 11B and proximal end arm section 11C) on both sides of the bent section, and the link member may be rotatably attached to the arm main body at the bent section. One of the arm sections may be connected with the arm main body through the biasing means while the other arm section is connected with the arm head. With this construction, a force in the horizontal direction (the longitudinal direction of the arm main body) may be converted, by a simple structure, into a force in the vertical direction. Accordingly, for example, even if a spring as the biasing means is arranged along the longitudinal direction of the arm main body so that the spring force of the spring acts along the longitudinal direction of the arm main body, the direction of the force is converted through the link mechanism when the force acts between the arm head and the arm main body, and therefore a moment for urging the retainer to rotate with respect to the arm head is appropriately generated. Such a change of the arrangement of the biasing means enables the thickness of the wiper arm to be thinner. Also, since a large moment may be efficiently obtained from the same force of the biasing means, the biasing means can be miniaturized, and therefore the wiper arm may be miniaturized (thinned).

The link mechanism is constituted of the arm main body side link member (for example, arm main body side link member 11) and the head side link member (for example, head side link member 12) which are rotatably connected with each other so that the combination of the arm main body side link member and the head side link member functions as a toggle mechanism when the arm main body is in its upright state with respect to the arm head (a locked-back state). With this construction, a large force can be obtained as a holding force for holding the arm main body in its upright state. Accordingly the wiper arm can be securely fixed in a stable locked-back state without increasing the size of the biasing means.

Also, the force through the link mechanism can be easily adjusted by changing the shape of the link member. In addition, it is possible to change the pressing force for pressing a wiper blade held by the wiper arm against a surface to be wiped and the holding force for holding the arm main body in its upright with respect to the arm head in various ways. This feature allows single biasing means to generate the pressing force and the holding force each of which has an appropriate value.

One of the arm main body side link member and the head side link member includes the fitting recess section of a cut-away shape (for example, fitting recess section 12D), and the other of the arm main body side link member and the head side link member includes the fitting axis (for example, fitting axis 11F) for fitting in the fitting recess section. With this feature, the link mechanism can be assembled simply by fitting the fitting axis into the cut-away fitting recess section so that assembling of the link mechanism, eventually the wiper arm, can be carried out efficiently.

### [Brief Description of Drawings]

[Figure 1] Figure 1 is a side view showing the overall structure of a wiper arm according to one embodiment of the present invention.
[Figure 2] Figure 2 is a cross-sectional side view showing the overall structure of the wiper arm in its normal use state.
[Figure 3] Figure 3 is a cross-sectional side view showing the overall structure of the wiper arm in its locked-back state.
[Figure 4] Figure 4 is a fragmentary exploded perspective view showing the wiper arm.
[Figure 5] Figure 5 is an exploded perspective view showing the link mechanism.
[Figure 6] Figure 6 is a fragmentary cross-sectional side view showing the wiper arm, in its normal use state.
[Figure 7] Figure 7 is a fragmentary cross-sectional side view showing the wiper arm in its locked-back state.
[Figure 8] Figure 8 is a fragmentary cross-sectional side view of a conventional wiper arm.

### [Description of Embodiments]

The present invention will now be described, by way of example, with reference to the accompanying drawings.

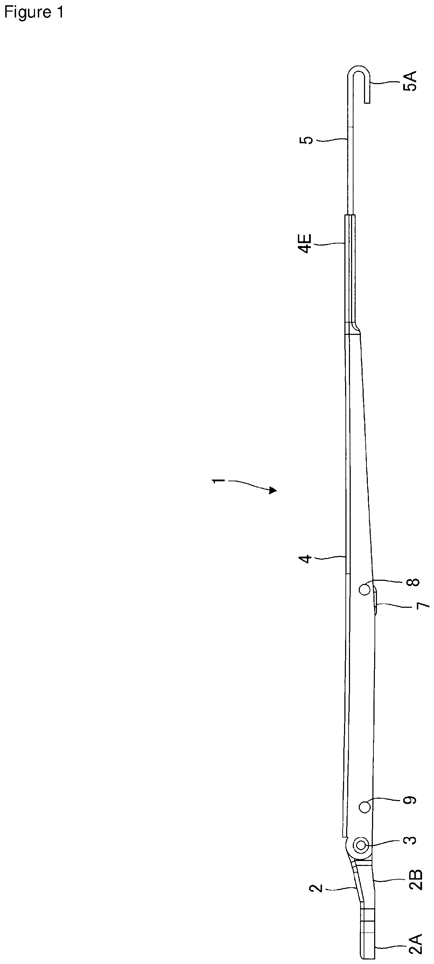

Figs 1 to 3 show the overall structure of a wiper arm 1 according to one embodiment of the present invention. As shown in the drawings, the wiper arm 1 includes an arm head 2, a retainer 4 which is rotatably connected to the arm head 2 through a pivot shaft 3, and an arm piece 5 which is held by the retainer 4. In the present embodiment, the retainer 4 and the arm piece 5 form an arm main body.

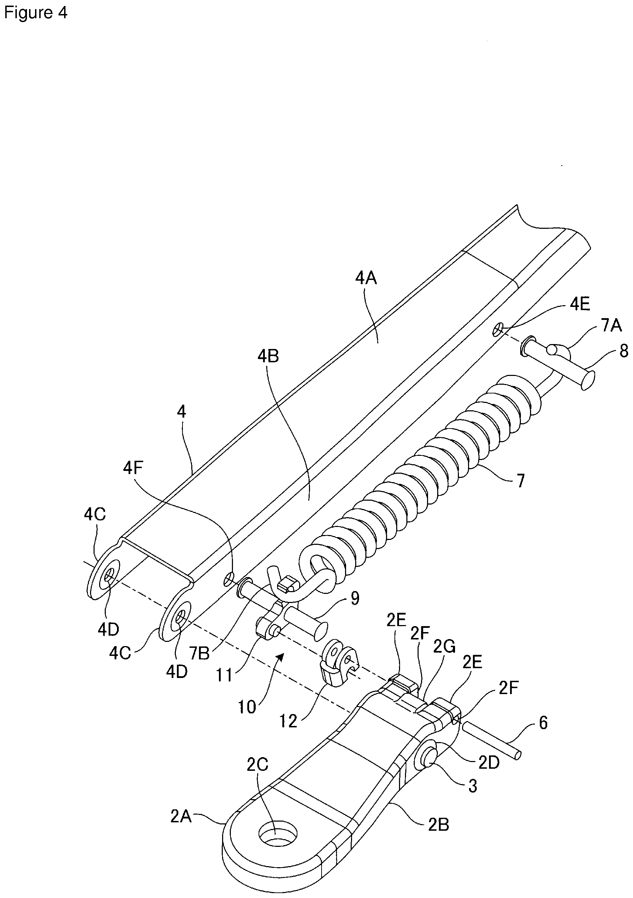

As shown in Fig. 4 in detail, the arm head 2 includes a proximal end section 2A having a substantially disk-like column shape and a body section 2B extending toward the distal end side from the proximal end section 2A. A connection hole 2C is formed in the proximal end section 2A and penetrates the proximal end section 2A vertically. A drive axis (not shown) of driving means (drive motor) is fit into the connection hole 2C so that the wiper arm 1 is driven by driving means.

A pivot shaft hole 2D is formed at a predetermined position on the distal end side of the body section 2B and penetrates the body section 2B in the left/right direction. The pivot shaft 3 is rotatably inserted in the pivot shaft hole 2D.

The distal end portion of the body section 2B includes a pair of left and right distal end sections 2E. A roller pin hole 2F is formed to each distal end section 2E and penetrates the distal end section 2E in the left/right direction. A roller pin 6 is inserted into these roller pin holes 2F. A gap section 2G is formed between the distal end sections 2E. A head side link member 12 of a link mechanism 10 is disposed within the gap section 2G and is attached at a portion of the roller pin 6 exposed in the gap section 2G, as will be described later.

The retainer 4 is a member constituting the longitudinally central portion of the wiper arm 1 and includes a top surface 4A and side surfaces 4B extending downward from the both sides of the top surface 4A. The retainer 4 includes side surfaces 4B, and extended sections 4C are provided on the proximal end side (on the side of the arm head 2) of the side surfaces 4B. A pivot shaft hole 4D is formed to each of the extended sections 4C. The pivot shaft 3 is attached to and extend through the pivot shaft holes 4D of the retainer 4 and the pivot shaft hole 2E of the arm head 2.

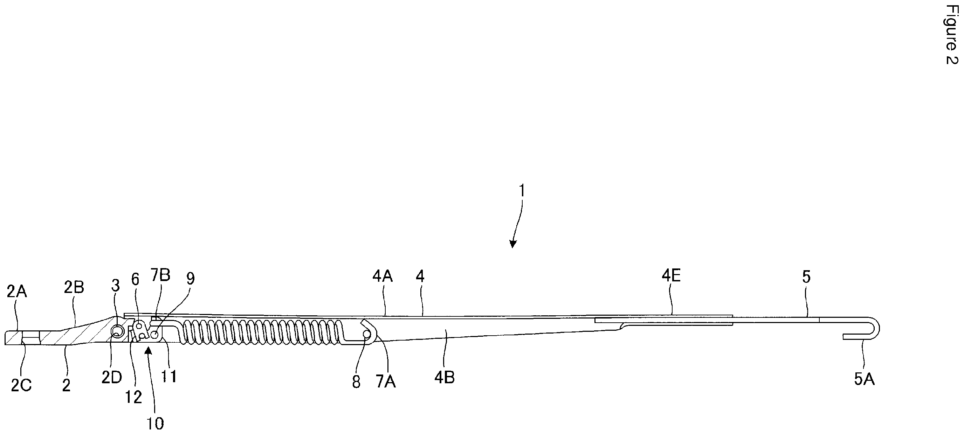

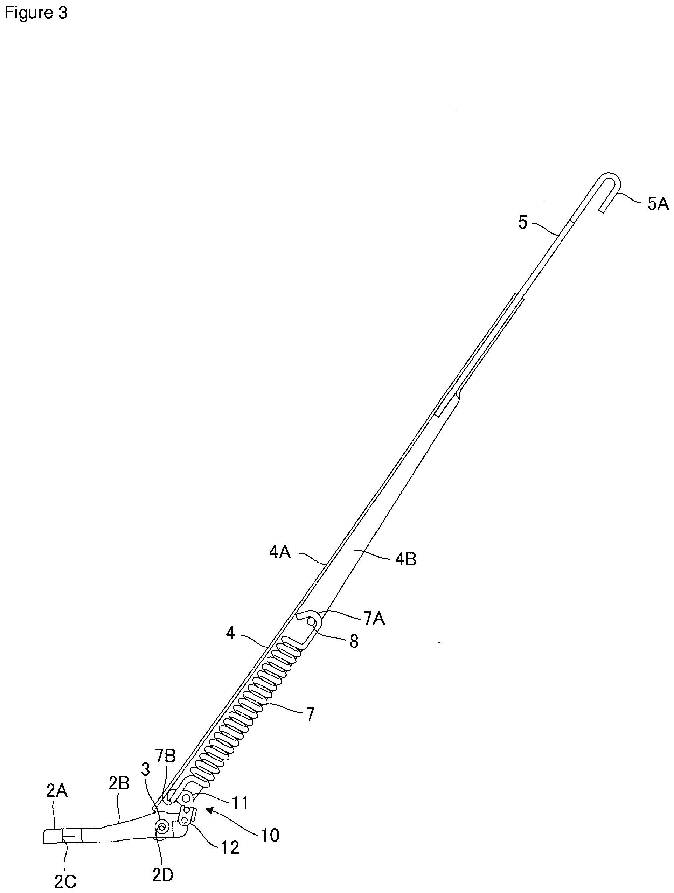

With this construction, the retainer 4 is connected to the arm head 2 and is rotatable about the pivot shaft 3, and the wiper arm 1 can be selectively placed in a normal use state where the arm main body (the retainer 4 and the arm piece 5) is extending approximately straight from the arm head 2 in the longitudinal direction (the state as shown in Figures 1 and 2) or in a locked-back state where the arm main body is in its upright state with respect to the arm head 2 (the state as shown in Figure 3) by rotating the retainer 4 with respect to the arm head 2.

The arm piece 5 is attached to a distal end section 4E of the retainer 4. The arm piece 5 is provided at its distal end portion with a U-hook section 5A which is bent in a U shape. A wiper blade, not shown, is held at the hook section 5A.

A spring 7 as an extension spring and the link mechanism 10 for converting and transmitting the spring force of the spring 7 are disposed within the space surrounded by the top surface 4A and the side surfaces 4B of the retainer 4.

Specifically, a rivet hole 4F are formed in each of the side surfaces 4B and is positioned approximately at the center of the retainer 4 in the in the longitudinal direction. An intermediate rivet 8 is attached in these rivet holes 4E, and a distal end section 7A of the spring 7 is attached to the intermediate rivet 8. Rivet holes 4F are provided in the side surfaces 4B of the retainer 4 and are positioned adjacent to the extended sections 4C. A support rivet 9 is fixed to the rivet holes 4F, and the link mechanism 10 is rotatably attached to this support rivet 9. The force applied to the link mechanism 10 is thereby supported by the support rivet 9.

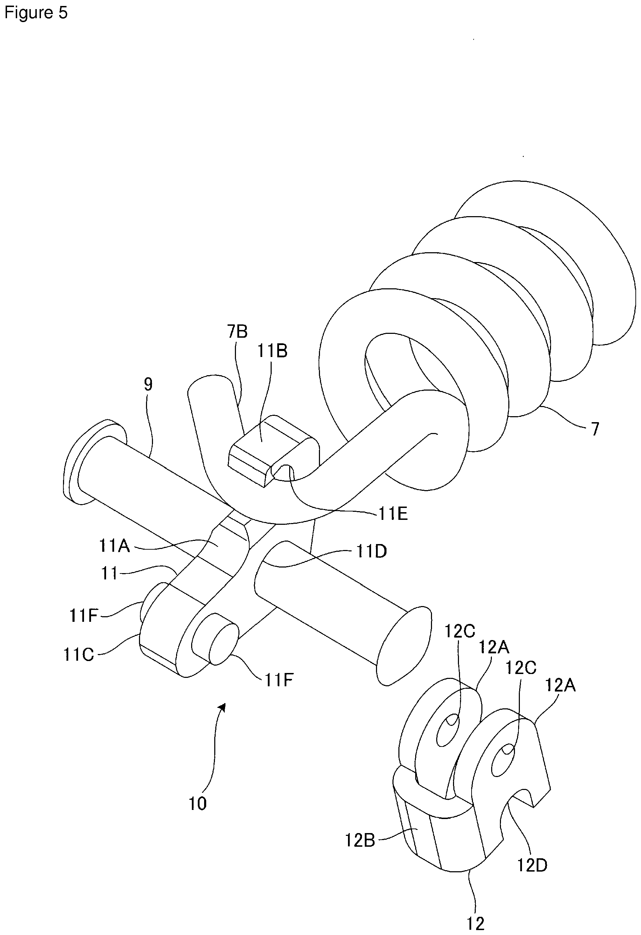

As shown in Fig. 5 in detail, the link mechanism 10 is comprised of a arm main body side link member 11 connected to the spring 7 and a head side link member 12 connected to the arm head 2.

The arm main body side link member 11 is a member having an L-shaped cross section and including a bent section 11A which is bent at substantially 90 degrees. The arm main body side link member 11 includes a distal end arm section 11B and a proximal end arm section 11C on the both sides of the bent section 11A. An axis hole 11D is formed in the bent section 11A and penetrates the bent section 11 A in the left/right direction. The support rivet 9 is inserted into the axis hole 11D so that the arm main body side link member 11 is rotatably attached to the support rivet 9.

A hook section 11C is provided in the distal end arm section 11B of the arm main body side link member 11, and a proximal end section 7B of the spring 7 is engaged with the hook section 11C. Fitting axes 11F are columnar protrusions and are provided on the both side surfaces of the proximal end arm section 11C of the arm main body side link member 11.

The head side link member 12 is comprised of side wall sections 12A and 12A disposed on the both sides and a bridge section 12B connecting the side wall sections 12A and 12A. A roller pin hole 12C is formed in each of the side wall sections 12A and penetrates the side wall section 12A. As described above, the head side link member 12 is arranged within the gap section 2G which is formed between the distal end sections 2E of the arm head, and the roller pin 6 is rotatably inserted into the roller pin hole 12C. The head side link member 12 is thereby rotatably connected to the distal end sections 2E of the body section 2B of the arm head 2 with the roller pin 6.

A fitting recess section 12D is formed as a cutout portion in the lower end of each side wall section 12A of the head side link member 12 and has a substantially semi-circular shape. The head side link member 12 is arranged so that the side wall sections 12A are disposed on the both sides of the proximal end arm section 11C of the arm main body side link member 11 and that the fitting axes 11F of the arm main body side link member 11 are rotatably fitted to the fitting recess sections 12D. With this construction, the arm main body side link member 11 and the head side link member 12 are connected with each other and are rotatable to each other about the fitting axes 11F. Accordingly, the arm main body side link member 11 and the head side link member 12 can be connected simply by fitting the fitting axes 11F into the fitting recess sections 12D as a cutout portion, and therefore the link mechanism 10 can be assembled quite easily.

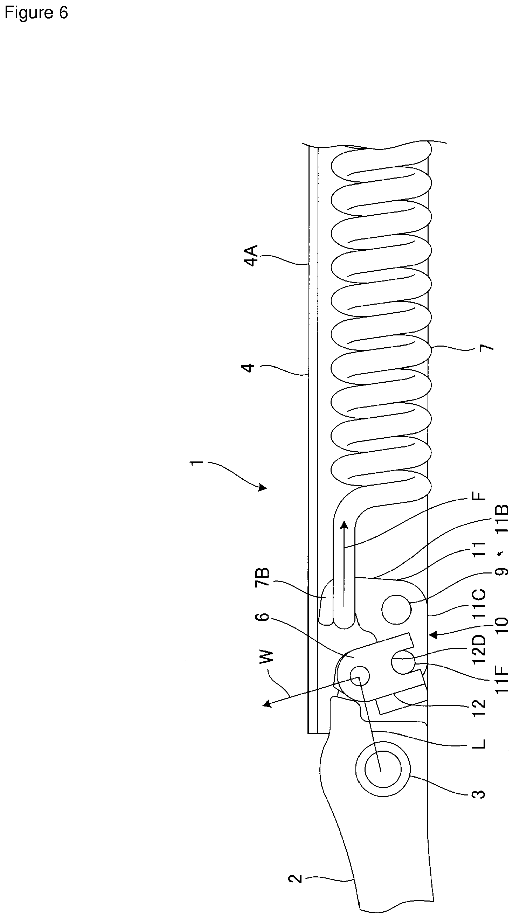

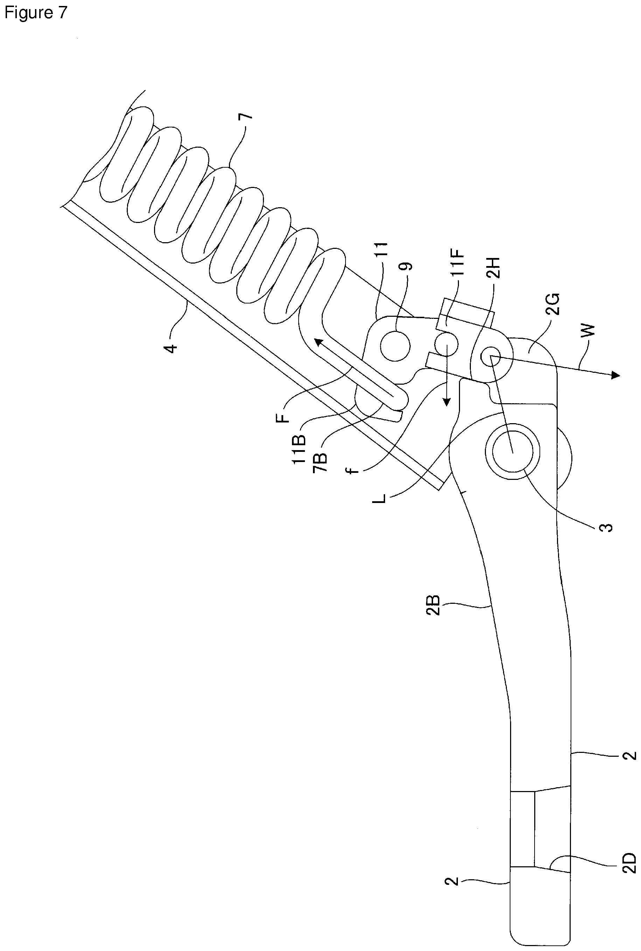

The action of the wiper arm 1 of the present embodiment will now be described with reference to Figs. 6 and 7.

As shown in Fig. 6, when the wiper arm 1 is in its normal use state (the state where the arm main body (the retainer 4 and the arm piece 5) are extending approximately straight from the arm head 2 in the longitudinal direction), the arm main body side link member 11 of the link mechanism 10 is arranged so that the proximal end arm section 11C is disposed along the longitudinal direction of the retainer 4 and that the distal end arm section 11B is arranged to direct upwardly. On the other hand, the head side link member 12 is rotated to a position near the distal end arm section 11B of the arm main body side link member 11 and is disposed in the lower side of the roller pin 6 (namely, the distal end section 2E of the arm head 2).

In such a normal use state, if a pulling force F of the spring 7 acts to pull the distal end arm section 11B of the arm main body side link member 11 toward the distal end side of the wiper arm 1, the arm main body side link member 11 tends to rotate in the clockwise direction in the drawing about the support rivet 9. Accordingly, the proximal end arm section 11C of the arm main body side link member 11 acts to push the head side link member 12 upward so that a pushing force W from the head side link member 12 acts in the upward direction on the distal end section 2E of the body section 2B of the arm head 2. Namely, the link mechanism 10 converts the spring force F from the spring 7 directed in the horizontal direction (the longitudinal direction of the retainer 4) into the force W directed in a substantially vertical direction and transmits such a force to the arm head 2. As the link mechanism 10 is supported by the retainer 4 through the support rivet 9, the force W acts between the retainer 4 and the arm head 2.

The force W acting on the arm head 2 is directed at a predetermined angle with respect to the line segment L connecting the rotation center of the retainer 4 (the center of the pivot shaft) and the point of application of the force (the center of the roller pin 6). The predetermined angle is determined by the structure of the link mechanism 10. Accordingly, a moment is generated between the arm head 2 and the retainer 4 to rotate them each other. Namely, the spring force of the spring 7 acts to rotate the retainer 4 in the clockwise direction in Fig. 6 with respect to the arm head 2 so that an appropriate pressing force is applied to the wiper blade which is held by the arm main body.

According to the wiper arm 1 of the present embodiment, the substantially horizontal force of the spring 7 in the normal use state is converted by means of the link mechanism 10 into the force W in the vertical direction and then acts on the arm head 2. Accordingly, the spring 7 can be arranged along the longitudinal direction of the retainer 4 and can be positioned near the top surface 4A of the retainer 4, as shown in Fig. 6. In other words, the wiper arm 1 of the present embodiment is able to generate an appropriate moment by means of the link mechanism 10 even if the force of the spring 7 is directed in the horizontal direction, while a conventional wiper arm (see Fig. 8) needs a length in the thickness direction to generate a moment acting between the arm head and the retainer. Thus, there is no need to ensure a length in the thickness direction for generating an appropriate moment, and therefore the wiper arm 1 can be formed thinner.

The entire of the link mechanism 10 can be arranged within the retainer 4 (within the space defined by the top surface 4A and the side walls 4B). In addition, the connection portion (the hook section 11E) of the proximal end section 7B of the spring and the arm main body side link member 11 of the link mechanism 10 does not protrude to the lower side of the retainer 4. Accordingly, the thickness of the wiper arm 1 is not increased due to protruding of the spring 7 and the link mechanism 10 from the retainer 4.

The force W may be converted by the link mechanism 10 to act in a direction approximately orthogonal to an arm L of the moment. Accordingly, the largest moment can be efficiently obtained with the same spring force. Thus, as a sufficiently large moment may be obtained by a relatively small spring 7, the wiper arm 1 can be miniaturized (thinned) by miniaturization (thinning) of the spring 7.

The link mechanism 10 is comprised of the arm main body side link member 11 and the head side link member 12, which are rotatable with respect to each other. Accordingly, if the rotation angle of the retainer 4 with respect to the arm head 2 is changed, an automatic position adjustment is appropriately carried out by the rotation of the arm main body side link member 11 and the head side link member 12 with respect to each other.

On the other hand, when the wiper arm 1 is in its locked-back state (the state where the arm main body is in its upright state with respect to the arm head 2) as shown in Fig. 7, the head side link member 12 of the link mechanism 10 is rotated to a position which is separated from the distal end arm section 11C of the arm main body side link member 11 with a great angle. In this state, the combination of the arm main body side link member 11 and the head side link member 12 of the link mechanism 10 functions as a toggle mechanism and acts to firmly hold the wiper arm 1 in the locked-back state.

Specifically, when the pulling force of the spring 7 applies a force F on the arm main body side link member 11 so that the distal end arm section 11B is rotated in the direction away from the head side link member 12, a horizontal force f acts on the connection portion (the fitting axes 11F) of the spring member 11 and the head side link member 12. As a result, the angle between the arm main body side link member 11 and the head side link member 12 is increased due to the rotation of each other, and thus the head side link member 12 applies a pushing force W directed downwardly on the distal end section 2E of the arm head 2.

The force W is directed at a certain angle with respect to the arm L of the moment and therefore functions to apply a moment between the arm head 2 and the retainer 4 to rotate the retainer 4 in the counter-clockwise direction in Fig. 7. On the other hand, as shown in Figure 7, the rotation of the head side link member 12 at the link mechanism 10 is limited by abutting the head side link member 12 against a stop end face 2H of the arm head 2 (the distal end face of the arm head 2 in the gap section 2G). Namely, the rotation of the retainer 4 in the counter-clockwise direction is stopped at the rotation angle at which the head side link member 12 abuts the stop end face 2H of the arm head 2. Accordingly, the wiper arm 1 is held in the locked-back state.

Since the arm main body side link member 11 and the head side link member 12 form a toggle mechanism, if the angle between the the arm main body side link member 11 and the head side link member 12 is increased by rotating to each other, the value of the force W is drastically increased with respect to the same force f (the force F). Accordingly, a great force can be obtained as the holding force for holding the wiper arm 1 in the locked-back state.

As described above, according to the wiper arm 1 of the present embodiment, when the wiper arm 1 is in the locked-back state, the link mechanism 10 acts as a toggle mechanism, and a great holding force can be generated by the spring force of the regular spring 7 to hold the wiper arm 1 in the locked-back state. Accordingly, if the spring 7 has a relatively small size, a sufficient holding force can be ensured and the stable locked-back state of the wiper arm can be realized.

The holding force for holding the wiper arm 1 can be easily adjusted to an appropriate value by adjusting the rotation angle between the arm main body side link member 11 and the head side link member 12 in the locked-back state. Accordingly, it is possible to constitute the wiper arm 1 in which the pressing force for pressing a wiper blade against a surface to be wiped and the holding force in the locked-back state are appropriately adjusted.

### [List of Reference Numerals]

- 1: wiper arm
- 2: arm head
- 2A: proximal end section
- 2B: body section
- 2C: connection hole
- 2D: pivot shaft hole
- 2E: distal end section
- 2F: roller pin hole
- 2G: gap section
- 2H: stop end face
- 3: pivot shaft
- 4: retainer
- 4A: top surface of retainer
- 4B: side surface of retainer
- 4C: extended section
- 4D: pivot shaft hole
- 4E: rivet hole
- 4F: rivet hole
- 5: arm piece
- 6: roller pin
- 7: spring
- 8: intermediate rivet
- 9: support rivet
- 10: link mechanism
- 11: arm main body side link member
- 11A: bent section
- 11B: distal end arm section
- 11C: proximal end arm section
- 11D: axis hole
- 11E: hook section
- 11F: fitting axis
- 12: head side link member
- 12A: side wall section
- 12B: bridge section
- 12C: roller pin hole
- 12D: fitting recess section

## Claims

1. A wiper arm (1) including an arm head (2), an arm main body (4) connected to said arm head (2) and rotatable about a pivot shaft (3), biasing means (7) disposed between said arm head (2) and said arm main body (4), and a link mechanism (10) rotatably attached to said arm main body (4),
wherein a force from said biasing means (7) acts between said arm head (2) and said arm main body (4) through said link mechanism (10), and
wherein said link mechanism (10) includes an arm main body side link member (11) linked with said arm main body (4) through said biasing means (7) and a head side link member (12) linked with said arm head (2), wherein said arm main body side link member (11) is rotatably attached to said arm main body (4), and said arm main body side link member (11) and said head side link member (12) are rotatably connected with each other,
**characterized in that** when said arm main body (4) is in an upright state with respect to said arm head, the combination of said arm main body side link member (11) and said head side link member (12) functions as a toggle mechanism to generate a force for holding said arm main body (4) in said upright state.

2. The wiper arm according to claim 1, wherein said arm main body side link member (11) includes a bent section (11A) and a pair of arm sections (11B, 11C) provided on both sides of said bent section (11A), wherein one of said arm sections (11B) is connected with said arm main body (4) through said biasing means (7), and the other of said arm sections (11C) is connected with said arm head (2).

3. The wiper arm according to claim 2, wherein said arm main body side link member (11) is rotatably attached to said arm main body (4) at the bent section (11A).

4. The wiper arm according to any one of claims 1 to 3 wherein one of said arm main body side link member (11) and said head side link member (12) includes a fitting recess section (12D) having a cut-away shape, and the other of said arm main body side link member (11) and said head side link member (12) includes a fitting axis (11F) for fitting in said fitting recess section (12D).

## Patentansprüche

1. Wischerarm (1), der einen Armkopf (2), einen Armhauptkörper (4), der mit dem Armkopf (2) verbunden und um eine Schwenkwelle (3) drehbar ist, ein Vorspannmittel (7), das zwischen dem Armkopf (2) und dem Armhauptkörper (4) angeordnet ist, und einen Verbindungsmechanismus (10), der drehbar an dem Armhauptkörper (4) angebracht ist, umfasst,
wobei eine Kraft von dem Vorspannmittel (7) zwischen dem Armkopf (2) und dem Armhauptkörper (4) durch den Verbindungsmechanismus (10) wirkt, und
wobei der Verbindungsmechanismus (10) ein armhauptkörperseitiges Verbindungsglied (11), das mit dem Armhauptkörper (4) durch das Vorspannmittel (7) verbunden ist, und ein kopfseitiges Verbindungsglied (12), das mit dem Armkopf (2) verbunden ist, umfasst, wobei das armhauptkörperseitige Verbindungsglied (11) an dem Armhauptkörper (4) drehbar angebracht ist und das armhauptkörperseitige Verbindungsglied (11) und das kopfseitige Verbindungsglied (12) drehbar miteinander verbunden sind,
**dadurch gekennzeichnet, dass**, wenn sich der Armhauptkörper (4) in einem aufrechten Zustand bezüglich des Armkopfs befindet, die Kombination aus dem armhauptkörperseitigen Verbindungsglied (11) und dem kopfseitigen Verbindungsglied (12) als ein Kniehebelmechanismus zur Erzeugung einer Kraft zum Halten des Armhauptkörpers (4) in dem aufrechten Zustand wirkt.

2. Wischerarm nach Anspruch 1, wobei das armhauptkörperseitige Verbindungsglied (11) einen gebogenen Bereich (11A) und ein Paar Armbereiche (11B, 11C), die auf beiden Seiten des gebogenen Bereichs (11A) vorgesehen sind, umfasst, wobei einer der Armbereiche (11B) durch das Vorspannmittel (7) mit dem Armhauptkörper (4) verbunden ist und der andere der Armbereiche (11C) mit dem Armkopf (2) verbunden ist.

3. Wischerarm nach Anspruch 2, wobei das armhauptkörperseitige Verbindungsglied (11) an dem gebogenen Bereich (11A) an dem Armhauptkörper (4) drehbar angebracht ist.

4. Wischerarm nach einem der Ansprüche 1-3, wobei das armhauptkörperseitige Verbindungsglied (11) oder das kopfseitige Verbindungsglied (12) einen Einpassungsvertiefungsbereich (12D) mit einer weggeschnittenen Form umfasst und das jeweils andere Verbindungsglied - das armhauptkörperseitige Verbindungsglied (11) oder das kopfseitige Verbindungsglied (12) - eine Passungsachse (11F) zum Einpassen in den Einpassungsvertiefungsbereich (12D) umfasst.

## Revendications

1. Bras d'essuie-glace (1) comportant une tête de bras (2), un corps principal de bras (4) relié à ladite tête de bras (2) et pouvant tourner autour d'un arbre pivot (3), un moyen de sollicitation (7) disposéd entre ladite tête de bras (2) et ledit corps principal de bras (4), et un mécanisme de liaison (10) fixé à rotation audit corps principal de bras (4),
une force provenant dudit moyen de sollicitation (7) agissant entre ladite tête de bras (2) et ledit corps principal de bras (4) par le biais dudit mécanisme de liaison (10), et
ledit mécanisme de liaison (10) comportant un organe de liaison du côté du corps principal de bras (11) relié audit corps principal de bras (4) par le biais dudit moyen de sollicitation (7) et un organe de liaison du côté de la tête (12) relié à ladite tête de bras (2), ledit organe de liaison du côté du corps principal de bras (11) étant fixé de manière rotative audit corps principal de bras (4), et ledit organe de liaison du côté du corps principal de bras (11) et ledit organe de liaison du côté de la tête (12) étant reliés de manière rotative l'un à l'autre,
**caractérisé en ce que** lorsque ledit corps principal de bras (4) est dans un état dressé par rapport à ladite tête de bras, la combinaison dudit organe de liaison du côté du corps principal de bras (11) et dudit organe de liaison du côté de la tête (12) fonctionne en tant que mécanisme basculant pour générer une force permettant de retenir ledit corps principal de bras (4) dans ledit état dressé.

2. Bras d'essuie-glace selon la revendication 1, dans lequel ledit organe de liaison du côté du corps principal de bras (11) comporte une section coudée (11A) et une paire de sections de bras (11B, 11C) prévues des deux côtés de ladite section coudée (11A), l'une desdites sections de bras (11B) étant reliée audit corps principal de bras (4) par le biais dudit moyen de sollicitation (7), et l'autre desdites sections de bras (11C) étant reliée à ladite tête de bras (2).

3. Bras d'essuie-glace selon la revendication 2, dans laquelle ledit organe de liaison du côté du corps principal de bras (11) est attaché de manière rotative audit corps principal de bras (4) au niveau de la section coudée (11A).

4. Bras d'essuie-glace selon l'une quelconque des revendications 1 à 3, dans lequel l'un dudit organe de liaison du côté du corps principal de bras (11) et dudit organe de liaison du côté de la tête (12) comporte une section renfoncée d'ajustement (12D) ayant une forme découpée, et l'autre dudit organe de liaison du côté du corps principal de bras (11) et dudit organe de liaison du côté de la tête (12) comporte un axe d'ajustement (11F) destiné à s'ajuster dans ladite section renfoncée d'ajustement (12D).
